## Europäisches Patentamt
## European Patent Office
## Office européen des brevets

(11) Veröffentlichungsnummer: **0 059 781**
**A2**

(12) # EUROPÄISCHE PATENTANMELDUNG

(21) Anmeldenummer: **81107286.7**

(22) Anmeldetag: **16.09.81**

(51) Int. Cl.³: **B 65 G 53/24**
**B 65 G 53/42**

(30) Priorität: **07.03.81 DE 3108713**

(43) Veröffentlichungstag der Anmeldung:
**15.09.82 Patentblatt 82/37**

(84) Benannte Vertragsstaaten:
**AT BE CH FR GB IT LI LU NL SE**

(71) Anmelder: **GABLER GmbH & Co., KG.**
**Dorstener Strasse 59-61**
**D-4230 Wesel 13(DE)**

(72) Erfinder: **Nitz, Martin**
**Klammersheide 13**
**D-4230 Wesel 13(DE)**

(74) Vertreter: **Karstedt, Eberhard**
**Kappbergstrasse 31**
**D-8901 Stadtbergen(DE)**

(54) Vorrichtung zum pneumatischen oder hydraulischen Heben und Fördern von Fördergut.

(57) Vorrichtung mit einem oder mehreren Gebläsen oder Verdichtern zum pneumatischen oder hydraulischen Saugen, Heben und Fördern von Fördergut, Diese Vorrichtung ist sowohl zum Betrieb im Lufthebeverfahren in Kombination mit dem Unterdruck-Saugverfahren als auch im Hochvakuum-Verfahren mit oder ohne Umluftrückführung geeignet.

Fig. 1

EP 0 059 781 A2

- 1 -

Vorrichtung zum pneumatischen oder hydraulischen Heben und Fördern von Fördergut

======================================================================

Die Erfindung betrifft eine Vorrichtung zum pneumatischen
oder hydraulischen Heben und Fördern, von trockenem,
schlammartigem oder flüssigem Fördergut, die stationür
oder mobil einsetzbar ist, mit Saugdüse, Saugschlauch,
Behälter, Abscheider, Gebläse in Ein- oder Mehrzahl bzw.
Verdichter und den dazugehörenden Armaturen.

Seit vielen Jahren werden Fördergeräte zum Absaugen von
beispielsweise Flugasche, Kohle, Zunder Sägespänen und
dergleichen als Vakuum-Saugförderanlagen für trockene
Fördergüter eingesetzt. Außerdem gibt es ähnliche Fördergeräte, die für Flüssigkeiten und Schlämme vergleichbare
Vakuumsaugförderanlagen verwenden.

Diese Fördergeräte sind also entweder für trockene Fördergüter oder für flüssige Fördergüter zu verwenden. Sehr
selten und mit großem technischen Aufwand ist es auch
möglich, beide Fördergüter entweder oder mit der der
gleichen Vorrichtung zu fördern.

Bei diesen Vorrichtungen wird ein Saugschlauch in das Fördergut gehalten, der an einem Vorrats- oder Transportbehälter angeschlossen ist. Aus diesem Behälter wird mittels eines Gebläses die Luft abgesaugt, so daß über den Saugschlauch das Fördergut in den Behälter eingesaugt wird. Prallbleche oder Umlenkungen, die zumeist im Behälter für das Fördergut eingebaut sind, sollen die Fördergüter im Behälter festhalten. Dabei ist es nicht zu vermeiden, daß erhebliche Mengen von Fördergut, besonders bei staubförmigen Fördergütern von der Trägerluft mitgerissen werden und durch das Gebläse hindurch aus der Druckseite des Gebläses austreten. Deshalb werden bekannte Einrichtungen wie Filter, Hydrozyklone, Zyklonabscheider oder dergleichen angeordnet.

Bei mobilen Anlagen dieser Vorrichtungen nimmt der Nutzraum oftmals nur etwa ein Drittel des zur Verfügung stehenden Gesamtraumes ein, während für die erforderlichen Abscheidungs-Installationen zwei Drittel dieses Raumes benötigt werden. Es sind Geräte bekannt, die zwar auf einem Fahrzeug aufgebaut sind, wegen des technischen Aufwandes jedoch keine Nutzlast mehr zur Verfügung haben, so daß sie nur " im Stand " arbeiten können und zum Abtransportieren des Fördergutes gesonderte Fahrzeuge benötigen.

Der Erfindung liegt die Aufgabe zugrunde, eine Vorrichtung als Hochleistungs-Umlauf-Sauggerät zu schaffen, bei dem ein bekanntes Vakuum-Saugfördergerät nach dem Umluft-Verfahren Verwendung findet, welches stationär oder mobil verwendet werden kann und welches in der Lage ist, alle bekannten pneumatischen oder hydraulischen Fördervorgänge durchzuführen.

- 3 -

Dabei wird die an sich bekannte Einrichtung verwendet, bei der ein bekannter saugfester Behälter mit einem Deckel versehen ist, der über den ganzen Querschnitt des Behälters klappbar verschlossen ist. Die saugfeste und flüssigkeitsdichte Abdichtung zwischen Deckel und Behälter wird mit einer Ringdichtung vorgenommen. An dem Deckel ist dabei ein Saugschlauch angebracht, der an der unteren Seite an eine für die pneumatische (und begrenzt hydraulische ) Förderung besonders ausgebildete Saugdüse angeschlossen ist. Im Behälter mündet das obere Ende des Saugschlauches in einen nach unten offenen Zentrifugalabscheider, der eine Grobabscheidung und eine gleichmäßige Verteilung des Fördergutes im Behälter vornimmt.

An dem Deckel ist an der dem Deckel gegenüberliegenden Wand eine Saugleitung mit einem Gebläse angeschlossen. Im Behälter ist vor dem Anschluß der Saugleitung ein Sieb zum Zurückhalten größerer Verunreinigungen des Fördergutes angebracht. Der Druckstutzen des Gebläses ist über einen Druckschlauch mit dem Eintrittsstutzen der Saugdüse verbunden.

Zur Abstimmung der Druckverhältnisse ist in der Außenwand des Gebläses eine einstellbare Klappe angebracht, deren Austritt in eine Rohrleitung mündet, die in einem Abscheider endet. Ein solches Umluftsystem ist beispielsweise bei Straßenkehrmaschinen bekannt, das dort nur für die Kehrrichtaufnahme dient und bei der besonders geformte Saugdüsen Verwendung finden, die die Straßenoberfläche reinigen.

Der Ablauf, beispielsweise über eine Apex-Düse des Abscheiders ist über eine Rohrleitung mit dem Behälter verbunden. Die Auslegung des Abscheiders, beispielsweise eines Hydrozyklons,entspricht den Gesamtdruckverhältnissen in einer solchen Einrichtung. Aus dem Austritt des Abscheiders tritt bei guter Auslegung reine Luft aus.

Der Erfindung liegt die Aufgabe zugrunde, eine derartige bekannte Einrichtung universell einsetzbar zu machen, um mit ihr sämtliche bekannte Saugverfahren durchzuführen.

Diese Aufgabe wird dadurch gelöst, daß durch den Einbau von einem oder mehreren Druckschläuchen, Diffusoren, Klappen in Ein- oder Mehrzahl und eines oder mehrere Dreiwegehähne in den Gang des Fördermediums, aus dem das Fördergut zum größten Teil ausgeschieden ist, der Betrieb als Lufthebeverfahren in Kombination mit dem Unterdrucksaugverfahren als auch im Hochvakuumverfahren mit oder ohne Umluftrückführung durchführbar ist.

Nach einer weiteren Ausgestaltung der Erfindung ist zu einem Gebläse ein weiteres Gebläse parallel geschaltet und weist jeweils einen eigenen Druckstutzen und eigene Saugleitungen auf, sowie eine zu diesen Saugleitungen zusätzliche Saugleitung über einen Dreiwegehahn, ein Filter und führt zu einem Verdichter, von welchem eine Druckleitung wahlweise zu einzelnen Bedarfstellen, wie beispielsweise einen Injektor leitbar ist.

Weitere Ausgestaltungen der Erfindung gehen aus den Unteransprüchen hervor.

Durch die Erfindung entsteht der Vorteil, die Vorrichtung jeweils am Einsatzort den auftretenden Bedingungen hinsichtlich des Fördergutes, der Fördermenge und der Förderhöhe anpassen zu können. Dabei wird erfindungsgemäß sichergestellt, daß die Belastung durch Stäube und Geräusche der Umwelt minimal gehalten werden.

Einige Ausführungsbeispiele der Erfindung sind in der Zeichnung dargestellt und werden im folgenden näher beschrieben:

Fig. 1 Aufbau und Anordnung einer bekannten Vorrichtung,

Fig. 2 Aufbau und allgemeine Anordnung einer erfindungsgemäßen Vorrichtung;

Fig. 3 schematische Anordnung bei normaler Saugförderung mit zwei Gebläsen,

Fig. 4 Unterdrucksaugverfahren mit Bohrung im Saugschlauch,

Fig. 5 Umluft-Unterdruck-Saugverfahren mit Rückführung der Luft von einem oder zwei Gebläsen in die Bohrung im Saugrohr oberhalb der Flüssigkeitsoberfläche,

Fig. 6 Umluft-Saugverfahren mit einem Gebläse und besonderen Saugdüsen gemäß Darstellung in Fig. 1,

Fig. 7 Umluft-Saugverfahren mit zwei Gebläsen und besonderen Saugdüsen,

Fig. 8 Luftheze-Verfahren (Air-Lift-Verfahren) mit Verdichte: und Anschluß unterhalb der Flüssigkeitsoberfläche

Fig. 9  Lufthebe- (Air-Lift)Verfahren mit Verdichteranschluß unterhalb der Flüssigkeitsoberfläche und
        mit einem oder zwei Gebläsen,

Fig. 10 Lufthebe- (Air-Lift) Umluftverfahren mit Verdichter
        allein,

Fig. 11 Lufthebe- (Air-Lift) Umluftverfahren mit zwei
        Gebläsen und

Fig. 12 Hochvakuum-Saugverfahren.

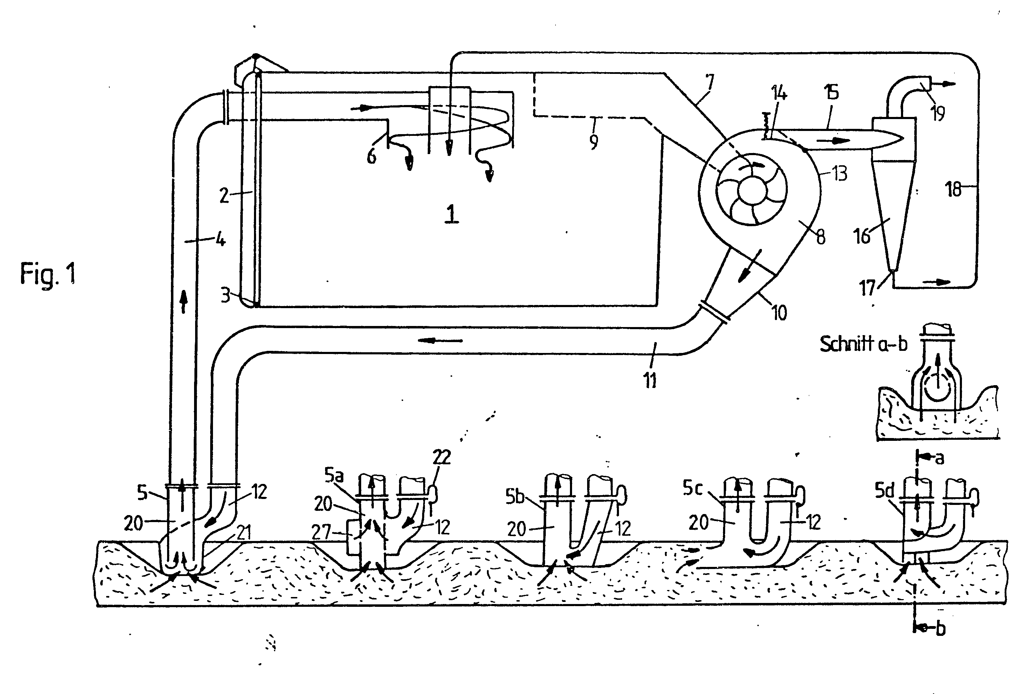

In Fig. 1 ist der Aufbau und die Anordnung einer bekannten
Vorrichtung dargestellt, von der die Erfindung ausgeht.
Sie zeigt einen bekannten saugfesten Behälter 1 der mit einem
Deckel 2 über den ganzen Querschnitt des Behälters 1 klappbar verschlossen ist. Die saugfeste und flüssigkeitsdichte
Abdichtung zwischen Behälter 1 und Deckel 2 wird üblicherweise durch eine Dichtung 3 vorgenommen.

An dem Deckel 2 ist ein Saugschlauch 4 angebracht, der an
der unteren Seite an eine für die pneumatische und begrenzt
hydraulische Förderung besonders ausgebildete Saugdüse 5
angeschlossen ist. Im Behälter 1 mündet das obere Ende des
Saugschlauches 4 in einen nach unten offenen Zentrifugalabscheider 6, der eine Grobabscheidung und eine gleichmäßige Verteilung des Fördergutes im Behälter 1 vornimmt.

An dem Behälter 1 ist an der dem Deckel 2 gegenüberliegenden
Wand eine Saugleitung 7 ein Gebläse 8 angeschlossen. Im
Behälter 1 ist vor dem Anschluß der Saugleitung 7 ein
Sieb 9 zum Zurückhalten größerer Teile der Fördergüter angebracht.

Der Druckstutzen 10 des Gebläses 8 ist über einen Druckschlauch 11 mit dem Eintrittsstutzen 12 der Saugdüse 5
verbunden.

In der Aussenwand 13 des Gebläses 8 ist eine einstellbare Klappe 14 angeordnet, deren Austritt in eine Rohrleitung 15 mündet, die in einem Abscheider 16 endet.
Dieses Umluftsystem ist bei Straßenkehrmaschinen bekannt.

Die Aufnahme des Fördergutes bzw. des abzusaugenden Gutes
erfolgt mit besonders gestalteten Saugdüsen, die in Fig. 1
als Saugdüsenausgestaltungen 5, 5a, 5b, 5c und 5d dargestellt sind.

Wie die Darstellung des Saugrohres 20 mit der Saugdüse 5
zeigt, ist das Saugrohr von einem außenliegenden Rohr 21
umschlossen, welches im unteren Bereich als Ringdüse ausgebildet ist und oben seitlich in den Eintrittsstutzen 12
mündet. Dabei steht der Ringmantel 27 nach unten über
das Saugrohr 20 vor.

Gemäß der Darstellung 5a ist das zylindrische Saugrohr 20
von dem geschlossenen Ringmantel 27 umkleidet, an dem der
Eintrittsstutzen 12 angeschlossen ist. Das Saugrohr 20
ist zum Luft-(Gas)-Eintritt im Bereich des Ringmantels 27
mehrfach geschlitzt.

Die Saugdüse 5b ist im unteren Bereich seitlich der Eintrittsstutzen 12 schräg von oben in das Saugrohr 20 eingeführt. Damit hat die Saugdüse 5b an der Aufstandsfläche
einen mehr oder weniger ovalen Querschnitt. Die Luft-(Gas)
Umleitung findet dabei innerhalb der Saugdüse selbst statt.

Nach der Darstellung der Saugdüse 5c ist der Eintrittsstutzen 12 rechtwinklig oder in einem anderen Winkel
zur Aufstandsfläche abgebogen.

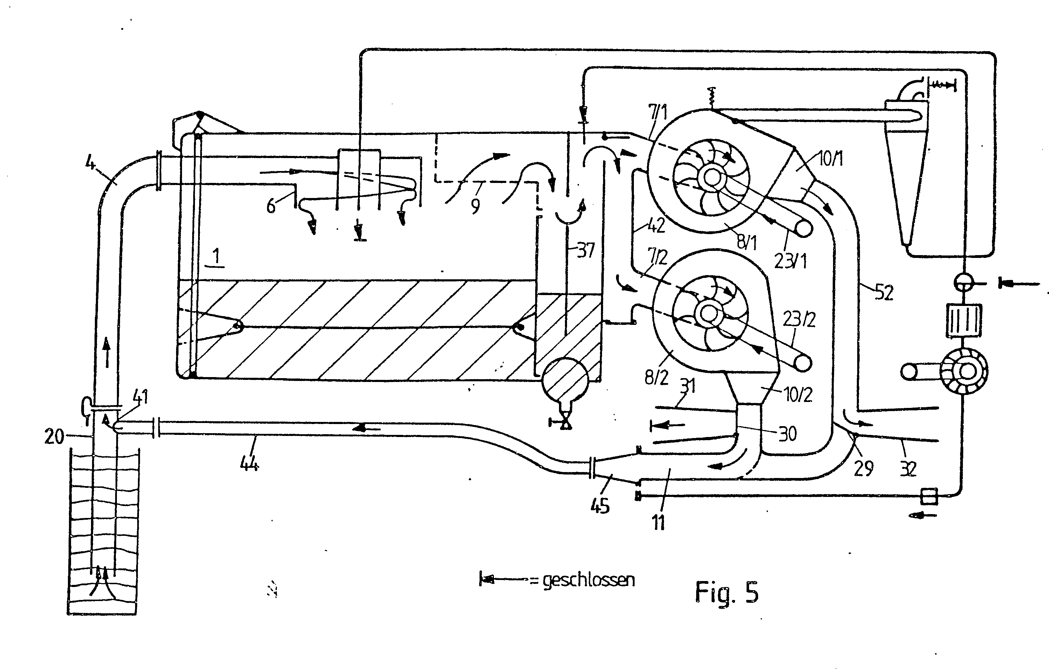

Gemäß der Darstellung in Fig. 5d ist der Eintrittsstutzen
12 am Ende etwa bis zum halben Querschnitt nach oben offen,
wie es aus der Schnittzeichnung darüber zu erkennen ist.
Das Saugrohr 20 umschließt den Eintrittsstutzen 12, wobei
die Aufstandsfläche ebenfalls einen etwa ovalen Querschnitt
hat, so daß das abzusaugende Gut geteilt in das Saugrohr
20 eintritt.

Zur Staubbindung bzw. als Schmiermittel im Saugschlauch 4
können zur Unterstützung einer gewählten Mischförderung
oder zum Nachreinigen des Saugschlauches 4 im Eintrittsstutzen 12 oder im Saugrohr Düsen 20 angeordnet werden,
die nicht gezeichnet sind, durch welche Flüssigkeit über
eine besondere Leitung eingespritzt wird.

Das Fördergut bzw. abzusaugende Gut für die in Fig. 1 dargestellte pneumatische und begrenzt hydraulische Förderung
wird von der Saugdüse 5 über den Saugschlauch 4 in den
Behälter eingesaugt bzw. eingedrückt, wobei der Zentrifugalabscheider 6 eine gewisse Grobabscheidung und Verteilung des Fördergutes bewirkt.

Der Ablauf (Apex-Düse) 17 des Abscheiders 16 ist über eine
Rohrleitung 18 mit dem Behälter 1 verbunden, so daß in der
neutralen Zone des Abscheiders 6 in dem unter Unterdruck
stehenden Behälter das im Abscheider 16 abgeschiedene Fördergut zurückgeführt wird. Aus dem Austritt 19 des Abscheiders 16 tritt reine Luft bzw. Gas aus.

Feine Teile des Fördergutes treten durch das verschleißfeste Gebläse 8 hindurch und werden im Kreislauf mit dem Trägermedium über den Druckschlauch 11 wieder der Saugdüse 5 zugeführt. Durch eine solche Maßnahme wird sichergestellt, daß Stäube (und Geräusche) nach außen nicht austreten können.

Ein geringer geregelter Volumenstrom der Luft wird über die Klappe 14 und dem nachgeschalteten Abscheider 16 aus dem Luftumlauf herausgeführt. Diese Luftmenge wird in der Saugdüse 5 von der Außenluft "ersetzt". Eine solche Anordnung hat den Vorteil, daß sich die umlaufende Luftmenge nicht erwärmen kann und daß die Umlenkung des Volumenstroms von der Druck- zur Saugseite nicht "umkippen" kann.

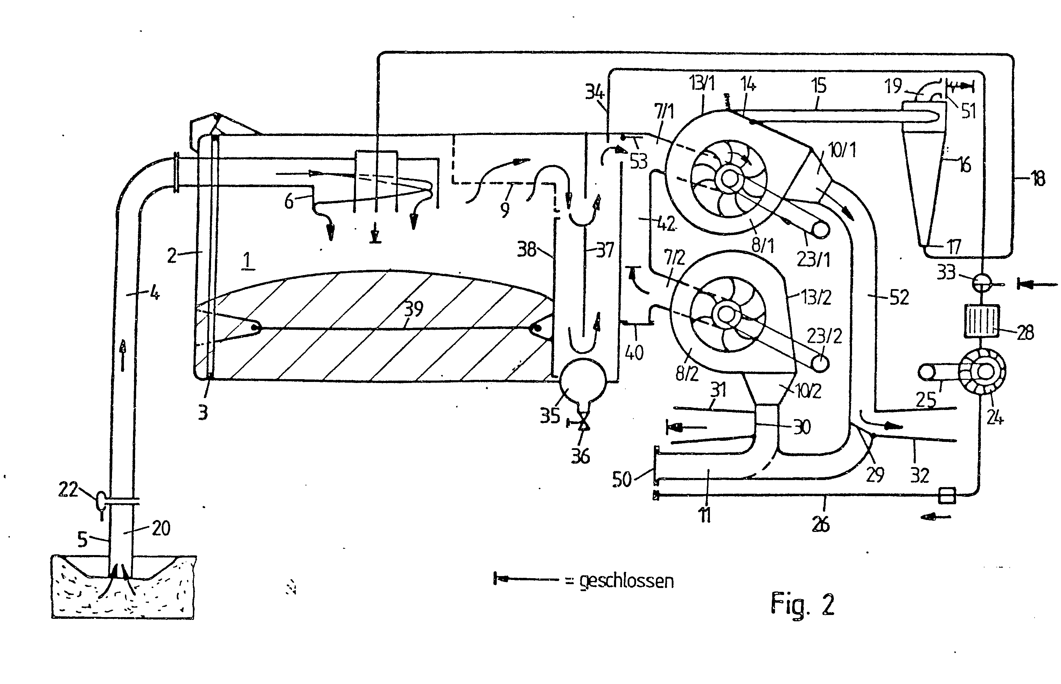

Der Aufbau und die Anordnung der erfindungsgemäßen Vorrichtung sind aus Fig. 2 zu erkennen.

Aus dieser Darstellung ist die allgemeine Anordnung in Ergänzung zur Fig. 1, die ohnehin nur einen Überblick insgesamt geben soll dargestellt, wobei in den nachfolgenden Figuren jeweils für gleiche Bauteile gleiche Bezugszeichen Verwendung finden. Außerdem sind in den folgenden Figuren zusätzliche Bezugszeichen verwendet worden, um die entsprechenden Funktionen klarer darzustellen.

Gemäß der Darstellung in Fig. 2 wird das Gebläse 8/1 mit dem Gebläseantrieb 23/1 in Betrieb gesetzt, während das zusätzlich angeordnete zweite Gebläse 8/2 außer Betrieb ist. Durch den Volumenstrom des Gebläses 8/1 wird mit dem Trägermedium Luft in eine pneumatische Förderung eingeleitet. Das zweite parallel geschaltete Gebläse 8/2 ist mit einem eigenen Gebläseantrieb 23/2 und einem eigenen Druckstutzen 10/2 und Saugleitungen 7/2 ausgerüstet.

Der Verdichter 24 mit dem Verdichterantrieb 25 liefert in die Druckleitung 26 und saugt über ein Filter 28 und einen Dreiwegehahn 33 aus der Saugleitung 34 die Luft an.

In der Druckleitung 52 sind Umschaltklappen 29 und 30 sowie die beiden Diffusoren 31 und 32 angeordnet. Ein Querrohr 35 mit einem Ablaßhahn 36 ist im oder an der unteren Seite des Behälters 1 angeordnet. Das Leitblech 37 dient der Trennung von etwa mitgeführtem Gut, welches über den Ablaßhahn 36 abgezogen wird. Die Entleerungsplatte 38 mit dem Gestänge 39 und der Reinigungsklappe 40 dient der Entleerung des Behälters 1.

Die Luft streicht um das Leitblech 37 zu dem Saugschacht 42, wo sie auf die beiden Gebläse 8/1 und 8/2 aufgeteilt wird, je nach dem ob ein oder beide Gebläse in Betrieb sind.

Während des Betriebes tritt das Fördergut in das zylinderische Saugrohr 20 der Saugdüse 1 und strömt in den Behälter 1. Die Trennung der Feststoffe von der Luft erfolgt im Zentrifugalabscheider 6. Die Luft strömt weiter durch ein Sieb 9 zum Leitblech 37 in den Saugschacht 42. Von diesem zieht das Gebläse 8/1 bzw. 8/2 die Luft über die Saugleitung 7/1 bzw. 7/2 in die Saugstutzen ein. Sie wird durch Druckstutzen 10/1 bzw. 10/2 der Druckrohrleitung 52 mit der offenen Umschaltklappe 29 durch den Diffusor 32 in die Atmosphäre gelenkt und ausgestoßen. Dadurch findet erfindungsgemäß ein kontinuierlicher Saugvorgang statt. Ein Rücksaugen kann nicht erfolgen, da die Umschaltklappe 30 gegen den Diffusor 31 geschlossen ist und die Druckleitung 11 mit dem Blindflansch 50 abgedichtet wird. Das Rückschlagventil 51 schließt die Rohrleitung 18 gegen den Behälter 1 ab. Ebenfalls ist der Dreiwegehahn 33 zum Behälter 1 geschlossen. Infolgedessen steht die gesamte Fördermenge des Gebläses 8/1 voll zur pneumatischen Förderung zur Verfügung, wenn von Reibungsverlusten abgesehen wird.

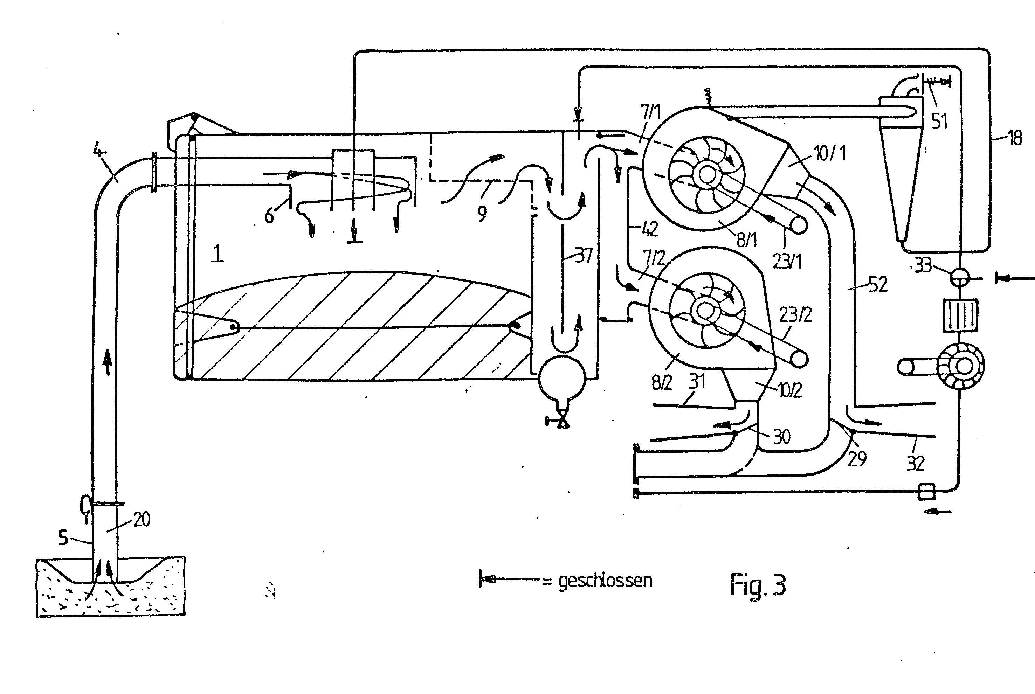

In Fig. 3 ist eine normale Saugförderung mit zwei Gebläsen gezeichnet. Die Gebläse werden mit den Gebläseantrieb 23/1 und 23/2 in Betrieb gesetzt. Mit dem Trägermedium Luft wird die pneumatische Förderung wie bei der Schilderung der Fig. 3 in Gang gesetzt. Vom Saugschacht 42 ziehen die Gebläse die Luft über die Saugleitungen 7/1 und 7/2 in ihrer Saugstutzen. Die Luft wird durch die Druckstutzen 10/1 und 10/2 teilweise der Druckrohrleitung 52 mit den offenen Umschaltklappen 29 und 30 und durch die Diffusoren 32 und 31 in die Atmosphäre ausgestoßen. Es findet also auch hier ein kontinuierlicher Saugvorgang statt. Auch hier ist ein "Rücksaugen" nicht möglich. Durch die beiden Gebläse wird die Luftmenge verdoppelt, so daß sich auch der Luftvolumenstrom im Saugrohr verdoppelt.

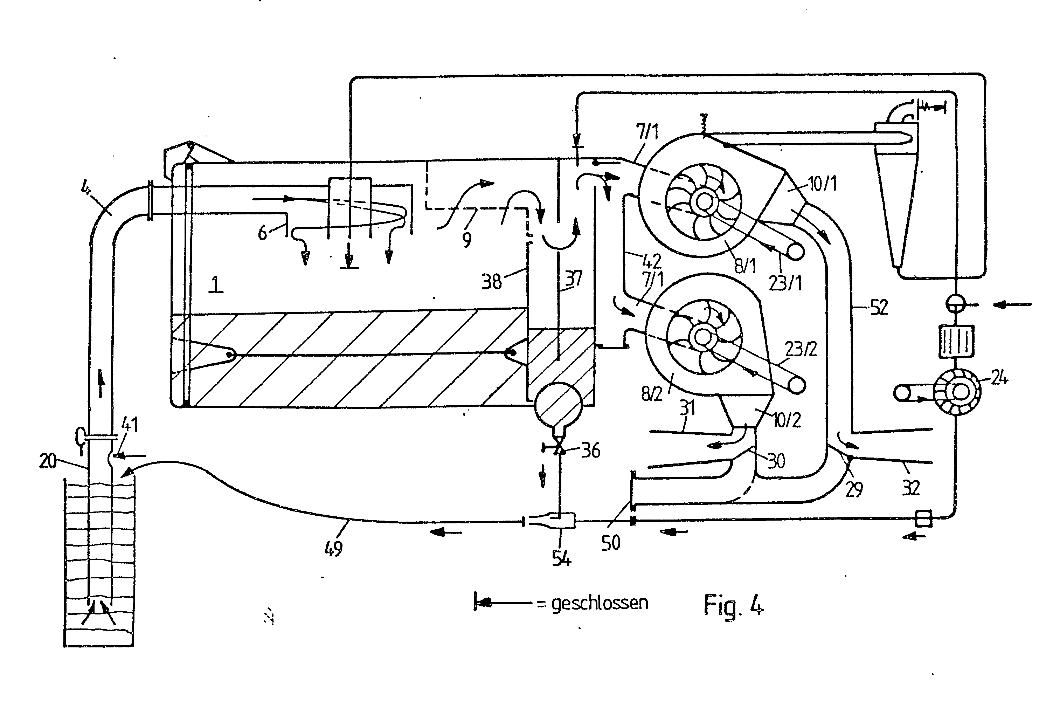

Das in Fig. 4 gezeigte Unterdruck-Saugverfahren mit Bohrung im Saugschlauch wird durch den erzeugten Volumenstrom der Gebläse mit dem Trägermedium Luft eine hydraulische Förderung dadurch eingeleitet, daß die Flüssigkeit und der in ihr enthaltene Stoff in das zylindrische Saugrohr eintritt und Luft in die Bohrung 41 nachgesaugt wird. Es findet wieder ein Durchfluß durch den Saugschlauch in den Behälter 1 statt. Die Trennung der Flüssigkeit mit den in ihr enthaltenen Feststoffen von der Luft erfolgt im Zentrifugalabscheider 6 in der geschilderten Weise. Das Weiterströmen der Luft erfolgt ebenfalls durch das Sieb, das Leitblech in den Saugschacht 42. Von diesem ziehen die Gebläse 8/1 und 8/2 die Luft über die Saugleitung 7/1 und 7/2 in ihre Saugstutzen ein. Die Luft wird durch die Druckstutzen 10/1 und 10/2 der Druckrohrleitung 52 mit den offenen Umschaltklappen 29, 30 durch die Diffusoren 32 und 31 in die Atmosphäre gelenkt und ausgestoßen. Somit findet ein kontinuierlicher Saugvorgang statt, wobei zur Herabsetzung der Dichte des Fördergemisches im Saugrohr 20 durch die Bohrung 41 Luft von der Atmosphäre zugeführt wird. Ein Injektor 54 saugt alternativ über den Ablaßhahn 36 Flüssigkeit aus dem unterhalb des Leitbleches befindlichen Raum. Mit dieser erfindungsgemäßen Einrichtung ist sowohl eine hydraulische als auch eine Mischförderung möglich, wobei ein kontinuierlicher Betrieb trotz des vorhandenen Vakuums im Behälter infolge der Abführung der Flüssigkeit über den Injektor 54 möglich ist.

Fig. 5 zeigt ein Umluft-Unterdruck-Saugverfahren mit Rückführung der Luft bzw. eines Gases von einem oder zwei Gebläsen in die Bohrung im Saugrohr 20 oberhalb der Flüssigkeitsoberfläche. Der Eintritt der Flüssigkeit und der in ihr enthaltenen Feststoffe erfolgt in der beschriebenen Weise in das Saugrohr 20, während das dem Bohrungsstutzen 41 zugeführte Gas zur Unterstützung der Förderung im Saugrohr 20 dient. Der Zutritt erfolgt aus dem Druckstutzen 10/2 durch die Druckleitung 11 in das Übergangsrohr 45 in den Druckschlauch 44. Die Umschaltklappe 30 ist gegen den Austritt des Diffusors 31 geschlossen.

Die Trennung der Flüssigkeit mit den in ihr enthaltenen Feststoffen von der Luft erfolgt im Zentrifugalabscheider 6. Die Luft strömt durch das Sieb 9, das Leitblech 37 in den Saugschacht 42. Überschüssige Flüssigkeit, die an der Entleerungsplatte 38 durchläuft, wird je nach Abfall durch den Ablaßhahn 36 entleert oder kontinuierlich wie im Beispiel mit einem vom Verdichter 24 betriebenen Injektor 54 gegen das vorhandene Vakuum im Behälter 1 über die Rücklaufleitung 49 zurückgeführt (siehe Fig. 4).

Gemäß Fig. 5 wird vom Gebläse 8/1 die Luft durch den Druckstutzen 10/1, der Druckrohrleitung 52 mit der offenen Umschaltklappe 29 durch den Diffusor 32 in die Atmosphäre geleitet und ausgestoßen. Somit findet ein kontinuierlicher Saugvorgang statt, wobei zur Herabsetzung der Dichte des Fördergemisches Luft bzw. Gas vom Gebläse 8/2 in den Bohrungsanschluß 41 zugeführt werden kann. Die Entleerung der überschüssigen Flüssigkeit ist nicht dargestellt.(Fig. 5)

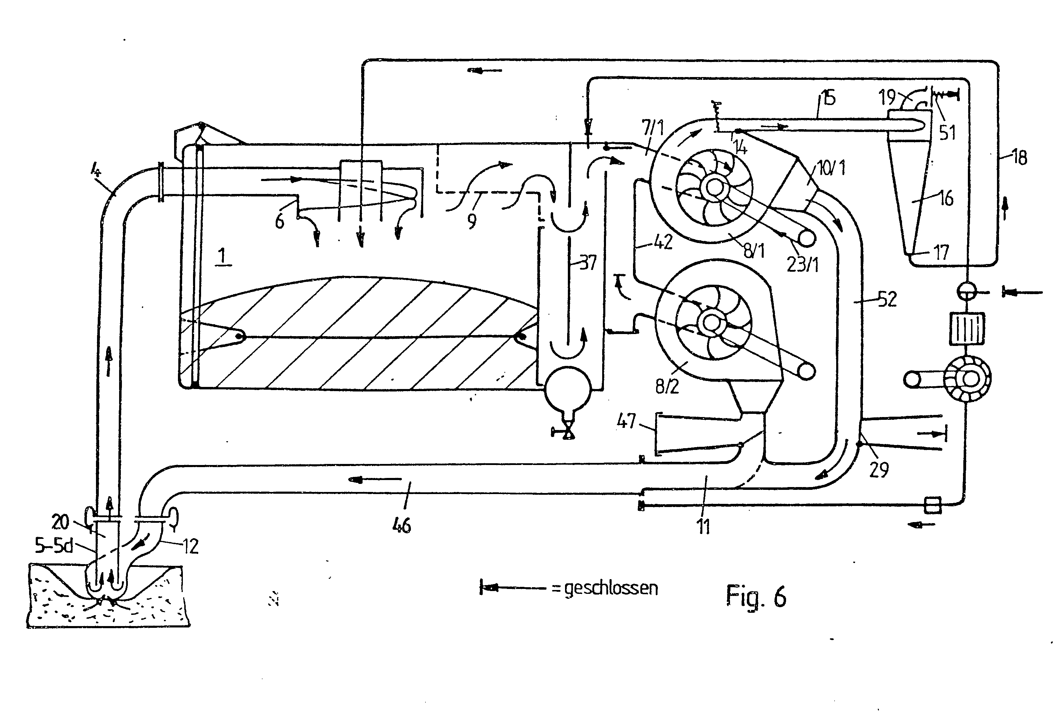

Fig. 6 zeigt ein Umlaufverfahren mit einem Gebläse und besonderen Saugdüsen, wie sie bereits bei Fig. 1 geschildert wurden. Auch hierbei wird wieder das absaugende Gut durch das Saugrohr 20 angesaugt. Die Luft wird durch den Druckstutzen 10/1, der Druckrohrleitung 52 mit der geschlossenen Umschaltklappe 29 in die Druckleitung 11 gefördert von der Luft durch den Druckschlauch 46 zu den in den Saugdüsen 5 bis 5d integrierten Eintrittsstutzen 12 gelangt.

Ein vorherbestimmter geringer Volumenstrom der Luft wird über die einstellbare Klappe 14 durch die Rohrleitung 15 dem Abscheider 16 zugeführt, also ausgeschieden. Diese Luftmenge wird in den Saugdüsen 5 bis 5d durch Außenluft ersetzt.

Über die Rohrleitung 18 werden die vom Abscheider 16 ausgetragenen Schmutzteile dem Behälter 1 zugeführt, weil im Behälter 1 Unterdruck besteht. Der Austritt erfolgt aus der Apex-Düse 17.

Die gereinigte Luft tritt aus dem Austritt 19 (Überlauf)

durch Öffnen des Rückschlagventils 51 in die Atmosphäre aus. Es findet ein kontinuierlicher Saugvorgang statt. Ein Rücksaugen kann nicht erfolgen, weil das Gebläse 8/2 nicht in Betrieb ist. Die Umschaltklappe 30 ist zur Druckleitung 11 geschlossen. Der Diffusor 31 ist mit dem Blindflansch 47 verschlossen. Auch der Dreiwegehahn 33 zum Behälter 1 ist verschlossen. Die Änderung des geförderten Luftvolumens erfolgt durch Änderung der Gebläsedrehzahl.

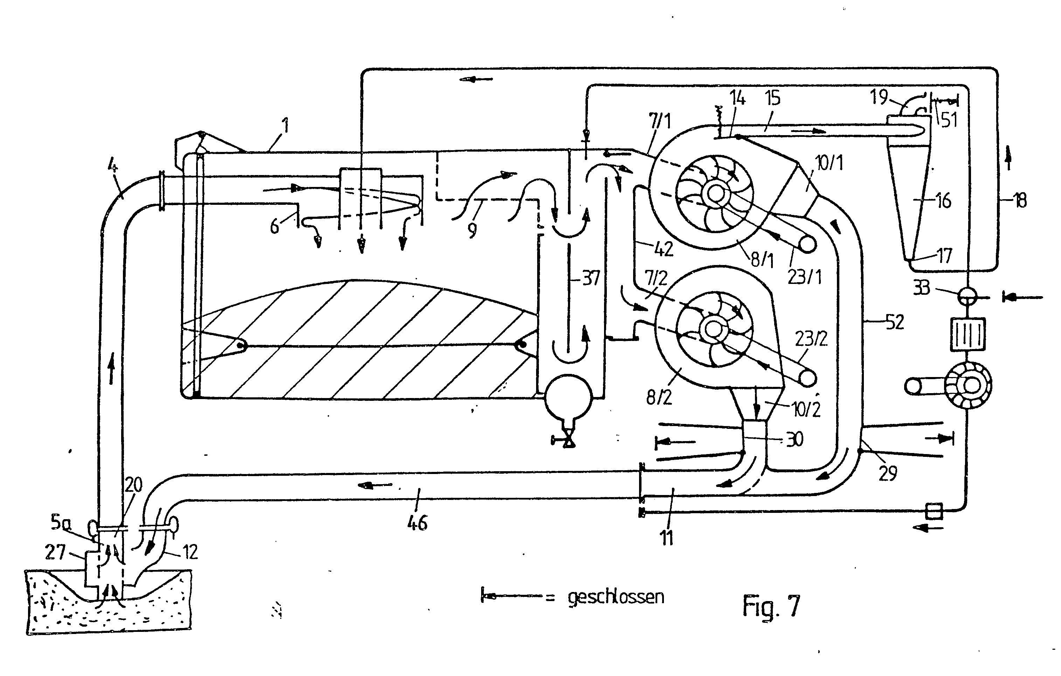

In Fig. 7 ist ein Umluft-Saugverfahren mit zwei Gebläsen und besonderen Saugdüsen dargestellt. Die Funktion der hier dargestellten Einrichtung unterscheidet sich von der Funktion der Fig. 6 nur durch die Tätigkeit mit zwei Gebläsen, wobei die Umschaltklappe 30 zum Diffusor 31 geschlossen ist. Es ist zu erkennen, daß der Wirkungsgrad dieser Anlage durch die Verwendung von zwei Gebläsen mit der Förderung der Druckluft in den Druckschlauch 46 und über die besonders gestalteten Saugdüsen besonders wirkungsvoll ist.

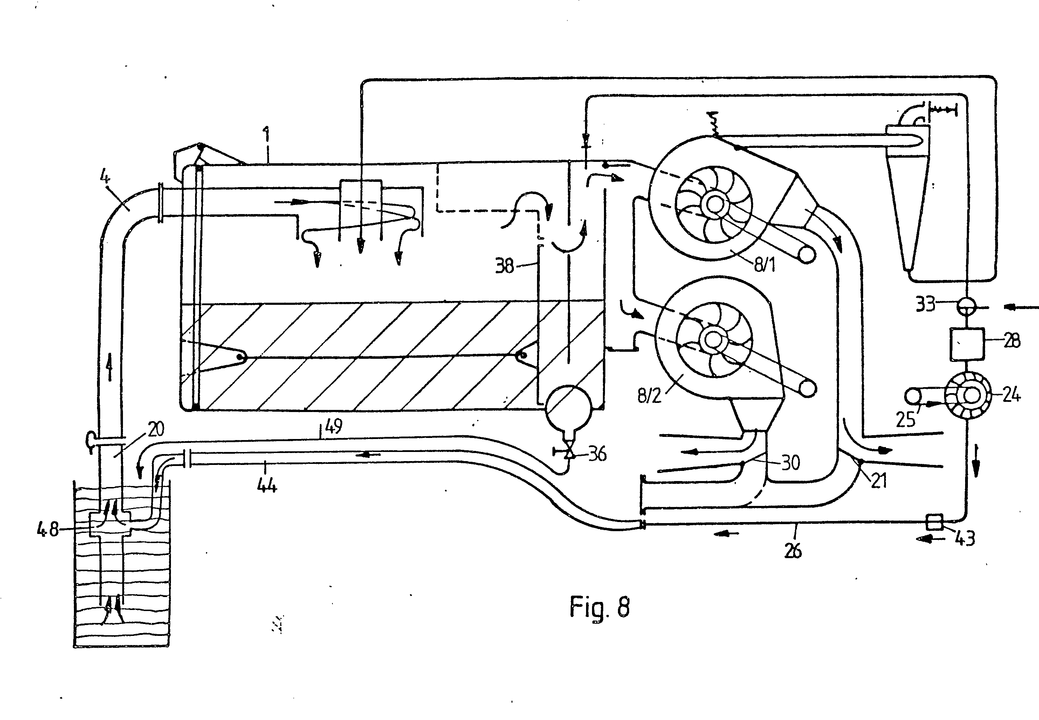

Ein unter dem Namen "Air-Lift-Verfahren" bezeichnetes Lufthebeverfahren mit Verdichter ist in Fig. 8 gezeigt. Dabei liegt der Anschluß unterhalb der Flüssigkeitsoberfläche und die Einrichtung arbeitet ohne jedes Gebläse.

Der Verdichter 24 wird mit dem Verdichterantrieb 25 in Betrieb gesetzt, wobei der Dreiwegehahn 33 die Verbindung von der Atmosphäre zum Filter 28 und zum Verdichter 24 herstellt. Die vom Verdichter 24 geförderte Luft wird über das Rückschlagventil 43 in die Druckleitung 26, den Druckschlauch 44, in die Ringdüse 48 des Saugrohres 20, die unterhalb der Flüssigkeitsoberfläche liegt, gedrückt.

- 15 -

Es findet demgemäß nach dem "Lufthebe-Verfahren" eine hydraulische Förderung von Flüssigkeiten und der in ihr enthaltenen Feststoffen statt. Das flüssige Fördergut wird dann durch den Saugschlauch 4 in den Behälter 1 gefördert. Beide Gebläse 8/1 und 8/2 sind bei dieser Betriebsweise außer Betrieb. Die mit hydraulischen Förderung in den Behälter 1 eintretenden Luft kann über die offenen Umschaltklappen 29 und 30 in die Atmosphäre entweichen. Der Behälter ist, wie es aus alledem ersichtlich ist, bei diesem Betrieb drucklos. Es findet ein kontinuierlicher Fördervorgang statt.

Überschüssige Flüssigkeit, die hinter der Entleerungsplatte 38 niedergeschlagen wird, kann, weil der Behälter drucklos ist, durch einen Ablaßhahn 36 entleert und über eine Rücklaufleitung 49 zurückgeführt werden.

Der Luftvo-lumenstrom mit seinen den Förderverhältnissen entsprechenden Druckhöhen des Verdichters 24 stehen dem Lufthebeverfahren zur hydraulischen Förderung und zur Mischförderung vo.1 zur Verfügung.

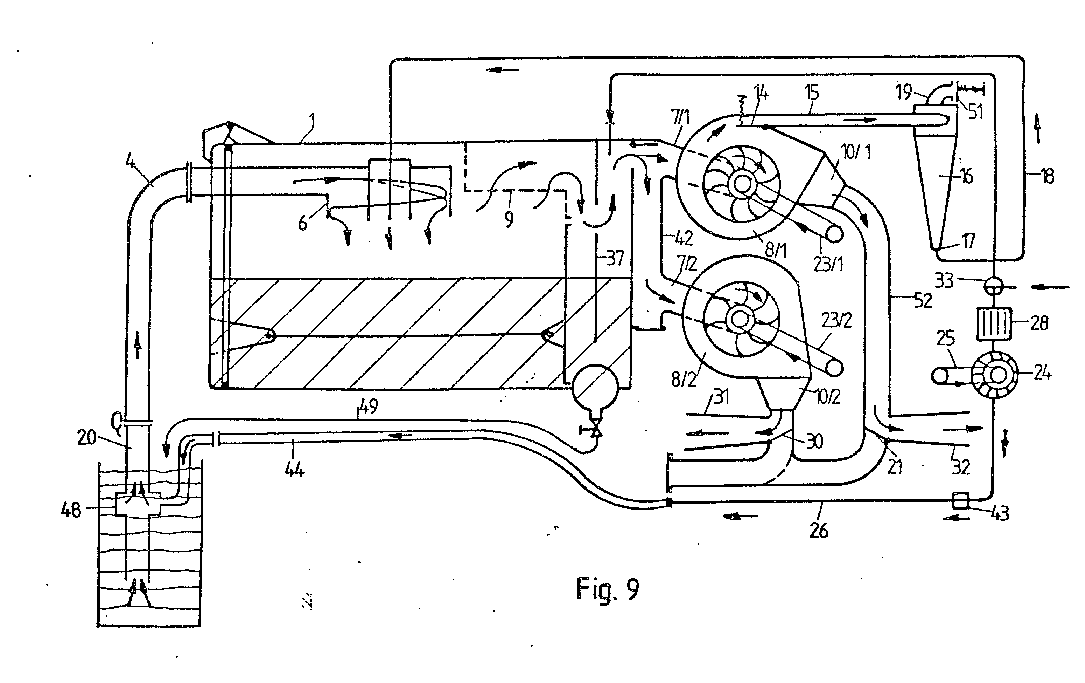

Fig. 9 zeigt ein Luft-Hebe-(Air-Lift)-Verfahren mit Verdichteranschluß unterhalb der Flüssigkeitsoberfläche und mit einem oder zwei Gebläsen zur Unterstützung des Luft-Hebeverfahrens. Gegenüber der Funktionsweise in Fig. 8 werden die Gebläse 8/1 und 8/2 durch die Gebläseantriebe 23/1 und 23/2 in Betrieb gesetzt. Durch den so erzeugten Luftstrom der parallel geschalteten Gebläse wird der Behälter 1 unter Unterdruck gesetzt und damit das vorher beschriebene Lufthebeverfahren unterstützt.

Je nach den Betriebsverhältnissen wird ein geringer Luft-

volumenstrom über die einstellbare Klappe 14 durch die Rohrleitung 15 dem Abscheider 16 zugeführt.

Ein vorher bestimmter geringer Volumenstrom der Luft bzw. des Gases wird über die einstellbare Klappe 14 durch die Rohrleitung 15 dem Abscheider 16 zugeführt. Diese Luftmenge wird in den Saugdüsen 5 bis 5d von der Außenluft ersetzt. Über die Rohrleitung 18 werden die vom Abscheider 16 ausgetragenen Schmutzteile dem Behälter 1 zurückgeführt.

Es ist zu betonen, daß bei der Darstellung in Fig. 1 beide Gebläse in Tätigkeit sind.

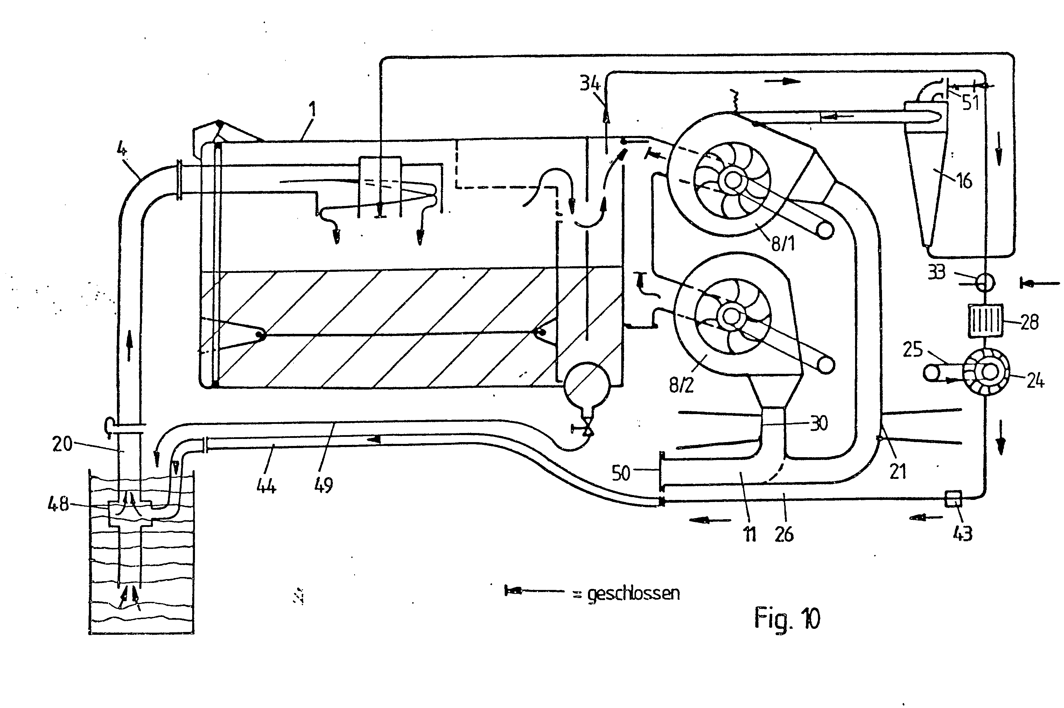

Fig. 10 zeigt wieder ein Lufthebe-Umlaufluftverfahren, das sich jedoch gegenüber der Funktion in Fig. 9 durch die Verwendung des Verdichters 24 unterscheidet, wobei die Saugseite des Verdichters am Behälter 1 angeschlossen ist.

Bei dieser Betriebsweise steht der Dreiwegehahn 33 in Verbindung vom Behälter 1 über die Verbindungsleitung 34 zum Filter 28 und zum Verdichter 24. Der Auslaß des Dreiwegehahnes 33 zur Atmosphäre ist bei dieser Betriebsweise verschlossen. Der erzeugte Luftstrom wird über das Rückschlagventil 43 in die Druckleitung 26, sowie den Druckschlauch 44 in die Ringdüse 48 des Saugrohres 20 geleitet, die unterhalb der Flüssigkeitsoberfläche liegt. Der Behälter 1 wird durch den Verdichter 24 unter Unterdruck gesetzt. Auch hierbei ist ein "Rücksaugen" nicht möglich, weil der Blindflansch 50 die Rohrleitungen 11 abdichtet und die Umschaltklappen 29 und 30 geschlossen sind sowie das Rückschlagventil 51 den Abscheider 16 verschließt. Die Gebläse 8/1 und 8/2 sind außer Betrieb.

Es findet nach dem Lufthebeverfahren eine hydraulische Förderung von Flüssigkeiten und der in ihr enthaltenen Feststoffe statt, wobei der Verdichter 24 nach dem Umlaufverfahren geschaltet ist.

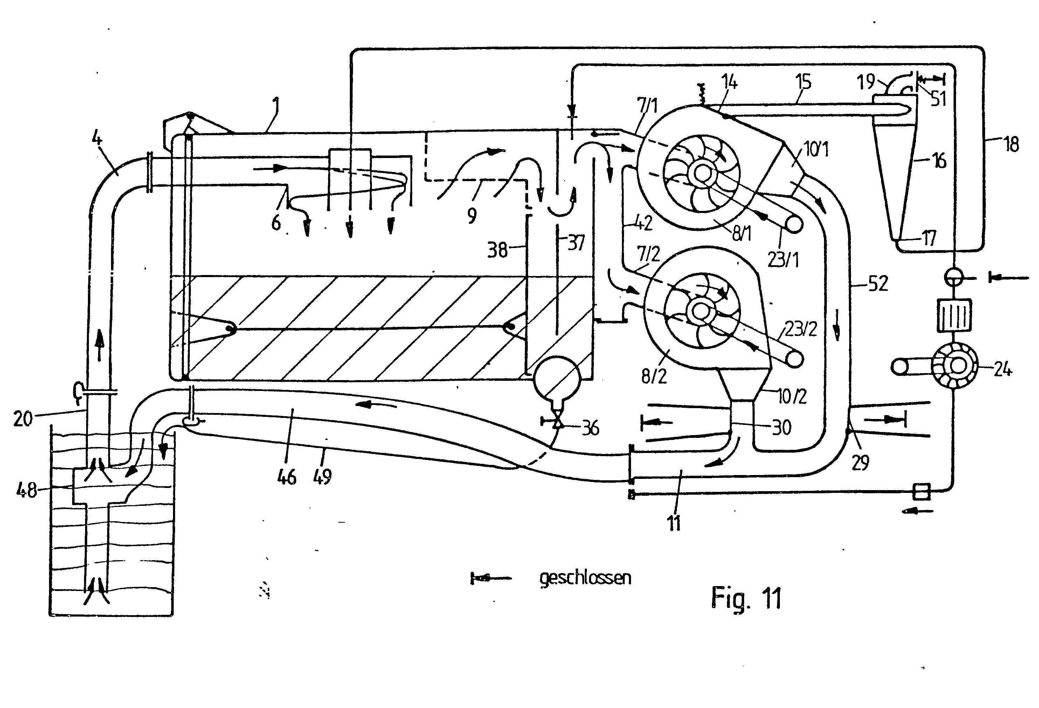

In Fig. 11 ist ein Lufthebe-/Air-Lift/-Umluftverfahren mit zwei Gebläsen dargestellt. In diesem Fall wird der Behälter 1 durch die Gebläse unter Unterdruck gesetzt. Die Wirkungsweise ist praktisch ähnlich der in Fig. 10 gezeigten.

Überschüssige Flüssigkeit, die an der Entleerungsplatte 38 abgeschieden wird, wird nach Anfall durch den Ablaßhahn 36 entleert oder kontinuierlich gegen das vorhandene Vakuum im Behälter über einen Injektor 54 in die Rücklaufleitung 49 zurückgeführt, wie es bereits bei der Schilderung der Funktion in Fig. 4 erläutert wurde.

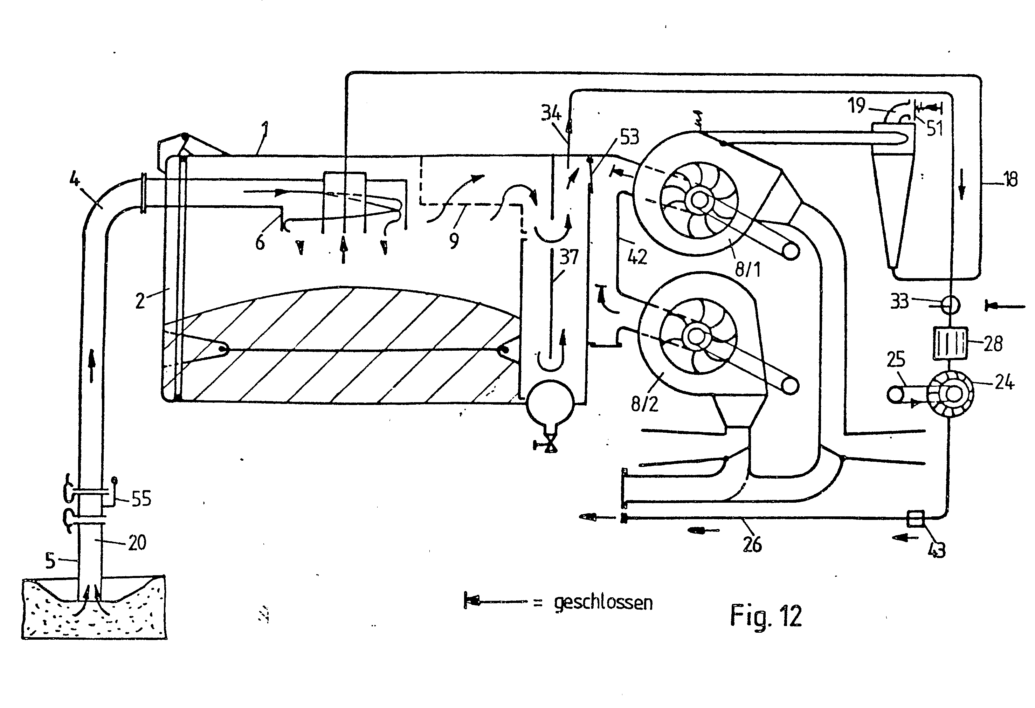

Fig. 12 schließlich zeigt ein Hochvakuum-Saugverfahren, welches statisch wirkt. Dabei wird der Verdichter 24 in Betrieb gesetzt und die Verbindungsleitung 34 vom Behälter 1 zum Dreiwegehahn 33 freigegeben. Der Dreiwegehahn steht in der Stellung: "Durchfluß vom Behälter 1 zum Filter 28 und zum Verdichter 24". Der Anschluß des Dreiwegehahnes 33 zur Atmosphäre ist geschlossen. Die Druckleitung 26 führt vom Verdichter 24 über das Rückschlagventil 43 in die Atmosphäre.

Durch das Absaugen der Luft durch den Verdichter 24 wird im Behälter 1 ein entsprechend hoher Unterdruck erzeugt, bei dem der zwischen dem Saugrohr 20 und dem Saugrohrschlauch 4 angeflanschte Absperrhahn 55 geschlossen ist.

Außerdem ist die im Saugschacht 42 angeordnete Saugschachtklappe 53 vakuumdicht verschlossen, so daß aus den stehenden Gebläsen 8/1 und 8/2 mit ihren Anschlüssen in die Atmosphäre keine Luft in den Behälter 1 strömen kann. Ebenfalls ist mit dem Rückschlagventil 51 am Überlauf 19 die Rohrleitung 18 zum Behälter 1 fest versperrt. Die Anordnung der Saugschachtklappe 5 an der gezeichneten Stelle hat den Vorteil, daß die Gebläse 8/1 und 8/2 nicht einem hohen Unterdruck Stand halten müssen. Der Behälter 1 mit dem Deckel 2 und seinen sonstigen Bauteilen ist für einen hohen Unterdruck erfindungsgemäß ausgelegt.

Wird bei Erreichen des entsprechenden Unterdrucks im Behälter 1 der Absperrhahn 55 geöffnet, strömen infolge des Außendruckes trockene und flüssige Förderstoffe in dem Behälter 1 durch die Saugdüsen 5 und den Saugschlauch 4 solange keine Luft nachströmen kann, die dann sehr schnell das vorhandene Vakuum im Behälter abbaut. Es handelt sich um eine konventionelle Unterdruck-Förderung.

Es stellt einen beachtlichen Vorteil der Erfindung dar, daß mit diesen Einrichtungen auch ein solches Förderverfahren durchgeführt werden kann.

Der größte Vorteil ist aber darin zu sehen, daß bei eventuellen Verstopfungen im Saugschlauch 4 bei den dynamischen pneumatischen und hydraulischen Förderarten der vorher beschriebenen Figuren ohne Unterbrechung der jeweiligen Betriebsarten, beispielsweise dem Fördern der Gebläse 8/1 oder 8/2 und solange der Verdichter 24 nicht zu andere Aufgaben benutzt wird, dieser mit einem

- 19 -

hohen Vakuum die Verstopfungen beseitigen bzw. durchreißen kann, indem einfach die Saugschachtklappe 53
bei laufendem Verdichter 24 kurzzeitig geschlossen wird.

Abschließend ist auch noch darauf hinzuweisen, daß
mit den erfindungsgemäßen Vorrichtungen sämtliche
gestellten erfinderischen Aufgaben gelöst werden können.

PATENTANSPRÜCHE :

=========================================================

1. Vorrichtung zum pneumatischen oder hydraulischen Heben und Fördern von trockenem, schlammartigen oder flüssigem Fördergut, die stationär oder mobil einsetzbar ist, mit Saugdüse (5), Saugschlauch (4), Behälter (1), Abscheider (6), Gebläse (8) in Ein- oder Mehrzahl bzw. Verdichter (24), dadurch gekennzeichnet, daß durch den Einbau von einem oder mehreren Druckschläuchen (11), Diffusoren (31, 32), Klappen (14, 29, 30, 53) in Ein- oder Mehrzahl und eines oder mehrerer Dreiwegehähne (33) in den Gang des Fördermediums, aus dem das Fördergut zum größten Teil ausgeschieden ist, der Betrieb als Lufthebe-Verfahren in Kombination mit dem Unterdruck-Saugverfahren als auch im Hochvakuum-Verfahren mit oder ohne Umluft-Rückführung durchführbar ist.

2. Vorrichtung nach Anspruch 1, dadurch gekennzeichnet , daß zu einem Gebläse (8/1) ein weiteres Gebläse (8/2) parallel geschaltet ist mit jeweils eigenen Druckstutzen (10/1 bzw. 10/2)und eigenen Saugleitungen (7/1 bzw. 7/2) sowie eine zu diesen Saugleitungen zusätzliche Saugleitung (34) über einen Dreiwegehahn (33), ein Filter (28) zu einem Verdichter (24). führt, von welchem eine Druckleitung (26) wahlweise zu einzelnen Bedarfsstellen, wie beispielsweise einem Injektor (54) leitbar ist.

3. Vorrichtung nach Anspruch 1 und/oder 2, dadurch g e - k e n n z e i c h n e t , daß der Injektor (54) unterhalb eines Ablaßhahnes (36) einer Abscheideeinrichtung für Feingut Schlamm oder dgl. aus dem bereits den Behälter (1) durchströmten Fördermittel angeordnet ist.

4. Vorrichtung nach Anspruch 3, dadurch g e k e n n - z e i c h n e t , daß die Injektoraustrittsleitung in eine Flüssigkeits-Rücklaufleitung (49) in und diese das Saugrohr (20) bzw. zur Absaugstelle zurückgeleitet.

5. Vorrichtung nach Anspruch 1 und/oder einem der folgenden, dadurch g e k e n n z e i c h n e t , daß bei einem Betrieb mit beiden Gebläsen (8/1 und 8/2) ein Diffusor (32) bei mit nach der Atmosphäre offener Umschaltklappe (29) mit dieser in Verbindung steht wobei die Umschaltklappe (30) gegen den Diffusor (31) geschlossen und die Druckleitung (11) mit einer Absperreinrichtung, beispielsweise einem Blindflansch (50) verschlossen ist.

6. Vorrichtung nach Anspruch 1, dadurch g e k e n n - z e i c h n e t , daß bei einem Betrieb mit zwei Gebläsen (8/1 und 8/2) das Trägermedium über die Diffusoren (31, 32) in die Atmosphäre strömt.

7. Vorrichtung nach Anspruch 1 und/oder einem der folgenden, dadurch g e k e n n z e i c h n e t , daß im Saugrohr (20) eine mit der Atmosphäre oder einer Rücklaufleitung (44) in Verbindung stehende Bohrung (41) angeordnet ist.

8. Vorrichtung nach Anspruch 1, dadurch g e k e n n - z e i c h n e t , daß wahlweise die Druckrohrleitung (52) eines oder beider Gebläse (8/1 und 8/2) zu einem Druckschlauch (44) führen, der im Saugrohr (20) ·mündet.

9. Vorrichtung nach Anspruch 1, dadurch g e k e n n - z e i c h n e t , daß wahlweise die Druckrohrleitung (52) eines oder beider Gebläse (8/1 und 8/2) zu einem Druckschlauch führen, der in einem Ringmantel (27) endet.

10. Vorrichtung nach Anspruch 1, dadurch g e k e n n - z e i c h n e t , daß wahlweise die Druckrohrleitung (52) eines oder beider Gebläse (8/1 und 8/2) zu einem Druckschlauch (44 bzw. 46) führen, der in eine Ringdüse (48) führt, die unterhalb des Flüssigkeitsspiegels des abzusaugenden Gutes liegt.

11. Vorrichtung nach Anspruch 10, dadurch g e k e n n - z e i c h n e t , daß anstelle der Gebläse (8/1 bzw. 8/2) ein Verdichter (24) Verwendung findet.

12. Vorrichtung nach Anspruch 11, dadurch g e k e n n - z e i c h n e t , daß der Behälter (1) drucklos ist.

13. Vorrichtung nach Anspruch 10 und 11, dadurch g e - k e n n z e i c h n e t , daß der Behälter unter Unterdruck steht, wobei ein oder beide Gebläse (8/1 bzw. 8/2) in die Atmosphäre blasen.

14. Vorrichtung nach Anspruch 1 und/oder 13, dadurch g e k e n n z e i c h n e t , daß die Saugseite des Verdichters (24) mit dem Behälter (1) verbunden ist.

15. Vorrichtung nach Anspruch 10 und/oder 11, dadurch g e k e n n z e i c h n e t , daß vor dem Verdichter (24) ein Dreiwegehahn (33) und in der Druckleitung (26) hinter dem Verdichter ein Rückschlagventil (43) angeordnet ist.

16. Vorrichtung nach Anspruch 15 und/oder 11, dadurch g e k e n n z e i c h n e t , daß die Saugseite des Verdichters (24) über einen Dreiwegehahn (33) mit der Atmosphäre verbindbar ist.

17. Vorrichtung nach Anspruch 1 und/oder einem der folgenden, dadurch g e k e n n z e i c h n e t , daß das Saugrohr (20) im Bereich der Saugdüse (5) von einem Ringmantel (27) mit Öffnungen in das Saugrohr umgeben ist, der an das Ende des Eintrittsstutzens (12) der Druckseite eines oder mehrerer Gebläse (8/1 bzw. 8/2) und/oder Verdichter (24) angeschlossen ist.

18. Vorrichtung nach Anspruch 17, dadurch g e k e n n - z e i c h n e t , daß der Ringmantel (27) nach unten über das Saugrohr (20) vorsteht.

19. Vorrichtung nach Anspruch 17, dadurch g e k e n n - z e i c h n e t , daß der Ringmantel (27) etwas oberhalb der Mündung des Saugrohres (20) angeordnet ist.

20. Vorrichtung nach Anspruch 17, dadurch g e k e n n - z e i c h n e t , daß die Mündung des Saugrohres (20) und des Eintrittsstutzens (12) in einer gemeinsamen, auf gleicher Ebene nach unten liegenden Eintrittsöffnung vereint sind (Fig. 1, 5b).

21. Vorrichtung nach Anspruch 17, dadurch g e k e n n - z e i c h n e t , daß die Mündungen des Saugrohres (20) und des Eintrittsstutzens (12) in einer gemeinsamen, auf gleicher Ebene nach der Seite liegenden Eintrittsöffnung (Fig. 1, 5c) vereint sind.

22. Vorrichtung nach Anspruch 17, dadurch g e k e n n - z e i c h n e t , daß die Mündung des Saugrohres (20) den Eintrittsstutzen (12), der an seinem unteren Ende etwa bis zum halben Querschnitt nach oben offen ist, umschließt, wobei das abzuaaugende Gut geteilt in das Saugrohr (20) eintritt.

23. Vorrichtung nach Anspruch 17 und/oder einem der folgenden, dadurch g e k e n n z e i c h n e t , daß das die einzelnen Rohre (5, 12, 20) durch Schnellverschlüsse (22) verbindbar sind.

Fig. 1

Schnitt a–b

1/12

0059781

= geschlossen

Fig. 2

2/12

0059781

Fig. 3

$\longmapsto$ = geschlossen

0059781

4/12

Fig. 4

= geschlossen

= geschlossen

Fig. 5

= geschlossen

Fig. 6

Fig. 7

 = geschlossen

Fig. 8

0059781

Fig. 9

1

4

34

51

16

8/1

33

10/12

28

25

24

20

8/2

30

48

44    49

50

11    26

21

43

⊨▬ = geschlossen

Fig. 10

0059781

geschlossen

Fig. 11

0059781

Fig. 12